# EUROPÄISCHE PATENTSCHRIFT

(11) **EP 1 589 251 B1**
(45) Veröffentlichungstag und Bekanntmachung des Hinweises auf die Patenterteilung: **18.06.2014**
(21) Anmeldenummer: 05008031.6
(22) Anmeldetag: 13.04.2005
(51) Int. Cl.: F16F 1/38

(54) **Lager für ein Kraftfahrzeug**
Mount for an automotive vehicle
Support pour un véhicule automobile

(30) Priorität: 21.04.2004 DE 102004019917
(43) Veröffentlichungstag der Anmeldung: 26.10.2005
(73) Patentinhaber: ZF Friedrichshafen AG, 88038 Friedrichshafen (DE)
(72) Erfinder: Schnaars, Wolfgang, 49084 Osnabrück (DE); Heuer, Karl, 49638 Nortrup (DE)

(56) Entgegenhaltungen:
- FR-A- 2 830 911
- GB-A- 653 982
- US-A- 2 962 311
- US-A- 4 913 411
- PATENT ABSTRACTS OF JAPAN Bd. 2000, Nr. 09, 13. Oktober 2000 (2000-10-13) & JP 2000 170837 A (TOKAI RUBBER IND LTD), 23. Juni 2000 (2000-06-23)

## Beschreibung

Die Erfindung betrifft ein Lager für ein Kraftfahrzeug, mit einem Innenteil, welches an seiner Außenmantelfläche eine in Längsrichtung verlaufende erste Wellenkontur aufweist, einer das Innenteil umgreifenden Außenhülse, welche an ihrer Innenmantelfläche eine in Längsrichtung verlaufende zweite Wellenkontur aufweist und einem zwischen den beiden Wellenkonturen angeordneten und in Längsrichtung wellenförmig verlaufenden Elastomerkörper, über den das Innenteil mit der Außenhülse verbunden ist.

Lager mit einem Innenteil, einer dieses umgreifenden Außenhülse und einem zwischen dem Innenteil und der Außenhülse angeordneten Elastomerkörper, über den das Innenteil mit der Außenhülse verbunden ist, sind aus dem Stand der Technik bekannt und weisen den Nachteil einer konstruktiv begrenzten Spreizung der radialen Steifigkeit zur axialen Steifigkeit auf. Für hohe Radialsteifigkeiten ergeben sich aufgrund der hohen Kalibrierung begrenzte Werte für die Axialsteifigkeit, wobei unter Kalibrierung die Reduzierung des Durchmessers der Außenhülse zu verstehen ist. Durch die Kalibrierung wird der Elastomerkörper radial vorgespannt, so dass eine Erhöhung der Radialsteifigkeit bei gleichzeitig niedriger Torsionssteifigkeit erzielbar ist. Ferner kann ein Zwischenblech eingesetzt werden, welches eine zusätzliche Erhöhung der Radialsteifigkeit bei niedriger Torsionssteifigkeit ermöglicht. Die Axialsteifigkeit bewegt sich hierbei allerdings in einem bestimmten begrenzten Bereich, so dass zum Erzielen einer höheren Axialsteifigkeit hinsichtlich beider Orientierung der Längsachse des Lagers häufig Anschlagpuffer verwendet werden.

Zur weiteren Erhöhung der Axialsteifigkeit wurden mit Wellenkonturen versehene Lager gemäß der eingangs genannten Art geschaffen, die seit einiger Zeit in Kraftfahrzeugen zum Einsatz kommen. Auch bei diesen Lagern ist die Spreizung der Kennlinienverhältnisse von Axialsteifigkeit, Radialsteifigkeit und Torsionssteifigkeit beschränkt, insbesondere kann nur eine bestimmte Axialsteifigkeit erzeugt werden.

In der GB 653 982 A wird ein Lager beschrieben, dessen Innenteil von größerer Länge als das Außenteil ist, so dass der zwischen Innenteil und Außenteil befindliche Elastomerkörper jeweils axial an die Stirnseiten des Außenteils angrenzt. Dabei können das Innenteil wie auch das Außenteil mit Vertiefungen oder Vorsprüngen für einen Eingriff in den Elastomerkörper versehen sein.

Darüber hinaus zeigt die US 5,887,859 ein Lager, dessen Innenteil einen mittleren sphärischen Bereich aufweist und von einer Außenhülse umgeben ist. Zwischen dem Innenteil und der Außenhülse ist ein Zwischenteil angeordnet, welches ebenso wie die Außenhülse an die Kontur des Innenteils angepasst ist. Zwischen dem Innenteil und der Zwischenhülse ist ebenso wie zwischen der Außenhülse und der Zwischenhülse jeweils ein Elastomerkörper angeordnet. Dieses Lager eignet sich in besonderer Weise für eine kardanische Bewegung von Innenteil zu Außenhülse, allerdings lassen sich keine hinreichenden radialen und axialen Steifigkeiten erzielen.

Somit liegt der Erfindung die Aufgabe zugrunde, ein Lager zu schaffen, bei dem eine größere Spreizung der Kernlinienverhältnisse von Axiälsteifigkeit, Radialsteifigkeit und Torsionssteifigkeit möglich ist.

Diese Aufgabe wird erfingdungsgemäß mit einem Lager für ein Kraftfahrzeug nach Anspruch 1 gelöst. Bevorzugte Weiterbildungen sind in den Unteransprüchen gegeben.

Das erfindungsgemäße Lager für ein Kraftfahrzeug weist ein Innenteil, welches an seiner Außenmantelfläche eine in Längsrichtung verlaufende erste Wellenkontur aufweist, eine das Innenteil umgreifende Außenhülse, welche an ihrer Innenmantelfläche eine in Längsrichtung verlaufende zweite Wellenkontur aufweist und einen zwischen den beiden Wellenkonturen angeordneten und in Längsrichtung wellenförmig verlaufenden Elastomerkörper auf, über den das Innenteil mit der Außenhülse verbunden ist. Dabei verlaufen die beiden Wellenkonturen nicht äquidistant zueinander.

Die beiden Wellenkonturen sind nicht äquidistant zueinander, so dass sie über ihre Längserstreckung nicht an jedem Ort den gleichen Abstand zueinander aufweisen. Hierdurch ist es möglich, eine größere Spreizung der Kennlinien von Axialsteifigkeit, Radialsteifigkeit und Torsionssteifigkeit zu erzielen, insbesondere die Radialsteifigkeit nahezu unabhängig einzustellen. Zum Beispiel kann ein Lager mit hoher Axialsteifigkeit und hoher Radialsteifigkeit bei gleichzeitiger Torsionsweichheit realisiert werden.

Sind die beiden Wellenkonturen identisch ausgebildet, kann die Nicht-Äquidistanz zum Beispiel dadurch erzielt werden, dass die äußere Wellenkontur gegenüber der inneren Wellenkontur in Längsrichtung versetzt bzw. phasenverschoben angeordnet ist. Eine derartige Ausgestaltung würde die Axialsteifigkeit aber nur in einer Richtung erhöhen. Aus diesem Grund sind die beiden Wellenkonturen bevorzugt unterschiedlich ausgebildet, so dass eine Erhöhung der Axialsteifigkeit in beide Richtungen erzielbar ist. Dabei verlaufen die beiden Wellenkonturen insbesondere in Phase, also nicht zueinander in Längsrichtung versetzt.

Erfindungsgemäß weist die Außenmantelfläche der Außenhülse eine in Längsrichtung verlaufende dritte Wellenkontur auf, wobei die Außenhülse von einer zweiten Außenhülse umgriffen ist, welche an ihrer Innenmantelfläche eine in Längsrichtung verlaufende vierte Wellenkontur aufweist, wobei zwischen der Außenhülse und der zweiten Außenhülse ein in Längsrichtung wellenförmig verlaufender zweiter Elastomerkörper angeordnet ist, über den die Außenhülse mit der zweiten Außenhülse verbunden ist. Dabei können die dritte und die vierte Wellenkontur ineinander greifen, so dass in Längsrichtung eine Überdeckung der dritten und der vierten, Wellenkontur gegeben ist.

Gemäß dieser Ausgestaltung wird von der Außenhülse ein Zwischenteil gebildet, so dass eine zusätzliche Erhöhung der Radialsteifigkeit erzielbar ist. Auch die zweite Außenhülse kann kalibriert werden und insbesondere an ihrer Außenmantelfläche eine in Längsrichtung verlaufende fünfte Wellenkontur aufweisen.

Die Wellenkonturen erhöhen die Axialsteifigkeit des Lagers und bilden einen Druck-/Schubpuffer, der je nach Anzahl der Wellen eine entsprechend größere Axialsteifigkeit hat, so dass die Wellenkonturen jeweils mehrere Wellenberge (Erhebungen) und mehrere Wellentäler (Vertiefungen) aufweisen.

Bei wenigstens einer Wellenkontur kann sich die mittlere Breite des Wellenbergs von Bei wenigstens einer Wellenkontur kann sich die mittlere Breite des Wellenbergs von der mittleren Breite des Wellentals unterscheiden, insbesondere kann die mittlere Breite des Wellenbergs geringer als die mittlere Breite des Wellentals sein.

Bevorzugt weist die Wellenkontur des Innenteils wenigstens einen auf die Außenhülse zulaufenden Wellenberg und wenigstens ein benachbartes Wellental auf, dessen mittlere Breite insbesondere größer als die mittlere Breite des Wellenbergs ist.

Ferner kann die Wellenkontur der Außenhülse wenigstens einen auf das Innenteil zulaufenden Wellenberg und wenigstens ein benachbartes Wellental aufweisen, dessen mittlere Breite insbesondere größer als die mittlere Breite des Wellenbergs ist.

Zur weiteren Erhöhung der axialen Steifigkeit können die beiden Wellenkonturen ineinander greifen, so dass sich eine Überdeckung der beiden Wellenkonturen in Längsrichtung ergibt. Hierdurch werden zwischen den beiden Wellenkonturen im Bereich der Flanken Keilanteile gebildet, aus denen eine Erhöhung der Axialsteifigkeit resultiert.

Während der Herstellung des erfindungsgemäßen Lagers kann die zweite Wellenkontur der Außenhülse zunächst nur sehr flach ausgebildet sein oder gänzlich fehlen, so dass das Innenteil ohne Behinderung in die Außenhülse eingelegt werden kann. Nachdem diese flach gewellte oder zylinderförmige Außenhülse, das Innenteil und der Elastomerkörper zusammengebaut sind und gegebenenfalls ein für den Elastomerkörper erforderlicher Vulkanisationsprozess abgeschlossen ist, wird die Außenhülse in ihrem Durchmesser reduziert, um die zweite Wellenkontur vollständig auszubilden. Dieser als "Kalibrieren" bezeichnete Vorgang der Durchmesserreduzierung ermöglicht es, den Elastomerkörper radial vorzuspannen, so dass die Radialsteifigkeit des Lagers erhöht werden kann. Werden beim Kalibrieren zusätzlich die Abstände zwischen den Flanken der beiden Wellenkonturen verringert, so wird der Elastomerkörper zwischen den Flanken auch in Längsrichtung vorgespannt, woraus eine Erhöhung der Axialsteifigkeit resultiert. Dabei kann die Torsionssteifigkeit des Lagers niedrig gehalten, insbesondere sogar verringert werden, so dass durch gezieltes Kalibrieren eine große Spreizung der Kennlinienverhältnisse von Axial-, Radial- und Torsionssteifigkeit möglich ist. Insbesondere werden der unterschiedliche Verlauf der beiden Wellenkonturen sowie eine Überdeckung derselben in Längsrichtung erst durch das Kalibrieren ausgebildet.

Ferner ist es möglich, auch das Innenteil als Hülse auszubilden. In diesem Fall kann alternativ oder zusätzlich zum Kalibrieren der Außenhülse eine Aufweitung des Durchmessers des Innenteils erfolgen. Verlaufen die Wellenkonturen vor dem Aufweiten nicht äquidistant zueinander, so ist durch das Aufweiten des Innenteils eine unterschiedliche Vorspannung des Elastomerkörpers in radialer und in axialer Richtung mit dem Effekt einer Spreizung von Axial- uhd Radialsteifigkeit erzielbar. Ferner ist über das Aufweiten des Innenteils eine Verringerung der Torsionssteifigkeit des Lagers möglich.

Das Innenteil und die Außenhülse können einteilig ausgebildet sein. Alternativ besteht das Innenteil aber aus einem Kern und einer diesen umgreifenden Ummantelung, von deren Außenmantelfläche die erste Wellenkontur gebildet ist. In diesem Fall weist der Kern insbesondere eine Nut auf, in welche die Ummantelung eingreift.

Bei der zweiteiligen Ausgestaltung des Innenteils ist es möglich, die Ummantelung aus Kunststoff herzustellen, die nach der Fertigstellung des Kerns an diesen angespritzt wird. Hierdurch können insbesondere bei der Serienfertigung Kosten eingespart werden, da eine aufwendige Bearbeitung der Oberfläche des Innenteils zum Ausbilden der ersten Wellenkontur entfallen kann.

Die Außenhülse und das Innenteil können exzentrisch zueinander angeordnet sein, so dass zum Beispiel unterschiedliche Radialsteifigkeiten for unterschiedliche radiale Richtungen realisierbar sind. Bevorzugt sind das Innenteil und die Außenhülse aber konzentrisch zueinander angeordnet.

Das erfindungsgemäße Lager wird bevorzugt in das Lagerauge eines Kraftfahrzeugbauteils eingesetzt, wobei zur axialen Fixierung des Lagers an einem Ende der Außenhülse bevorzugt eine Außenschulter vorgesehen ist. Das Lager kann dann bei der Montage soweit in das Lagerauge eingedrückt werden, bis die Außenschulter an dem das Lagerauge umgebenden Randbereich des Kraftfahrzeugbauteils anliegt.

Ferner kann an der Außenschulter ein sich in Längsrichtung erstreckender Elastomerpuffer vorgesehen sein, der insbesondere an der der zweiten Wellenkontur abgewandten Seite der Außenschulter angeordnet ist.

Die Außenmantelfläche der Außenhülse kann im wesentlichen zylinderförmig ausgebildet sein. Bevorzugt weist aber die Außenmantelfläche der Außenhülse eine in Längsrichtung verlaufende dritte Wellenkontur auf, die z. B. während des Kalibrierens der Außenhülse hergestellt werden kann. Somit ist es möglich, die zweite und die dritte Wellenkontur gleichzeitig auszubilden, indem die Außenhülse während des Kalibrierens an unterschiedlichen Stellen unterschiedlich stark in ihrem Durchmesser reduziert wird.

Bei allen Ausgestaltungen der Erfindung sind das Innenteil oder der Kern des Innenteils, die Außenhülse und gegebenenfalls die zweite Außenhülse bevorzugt aus Metall, insbesondere aus Stahl oder Aluminium hergestellt. Als bevorzugter Elastomerwerkstoff wird Gummi verwendet.

Ferner betrifft die Erfindung ein Kraftfahrzeugbauteil mit dem vorgenannten erfindungsgemäßen Lager, wobei das Kraftfahrzeugbauteil ein Lagerauge aufweist, in welches das Lager eingesetzt ist.

Die Erfindung wird nachfolgend anhand bevorzugter Ausführungsformen unter Bezugnahme auf die Zeichnung beschrieben. In der Zeichnung zeigen:
- Figur 1: eine Seitenansicht eines nicht-erfindungsgemäßen Lagers gemäß einer ersten Ausführungsform,
- Figur 2: eine Draufsicht auf das Lager nach Figur 1,
- Figur 3: eine Schnittansicht des Lagers nach Figur 1,
- Figur 4: eine Schnittansicht eines Kraftfahrzeugbauteils, in welches das Lager nach Figur 1 eingesetzt ist,
- Figur 5: eine Schnittansicht eines nicht-erfindungsgemäßen Lagers gemäß einer zweiten Ausführungsform, welches in ein Kraftfahrzeugbauteil eingesetzt ist,
- Figur 6: eine vergrößerte Darstellung des aus Figur 5 ersichtlichen Ausschnitts "X",
- Figur 7: eine perspektivische Ansicht des Lagers nach Fig. 5 und
- Figur 8: eine Schnittansicht des erfindungsgemäßen Lagers gemäß einer dritten Ausführungsform, welches in ein Kraftfahrzeugbauteil eingesetzt ist.

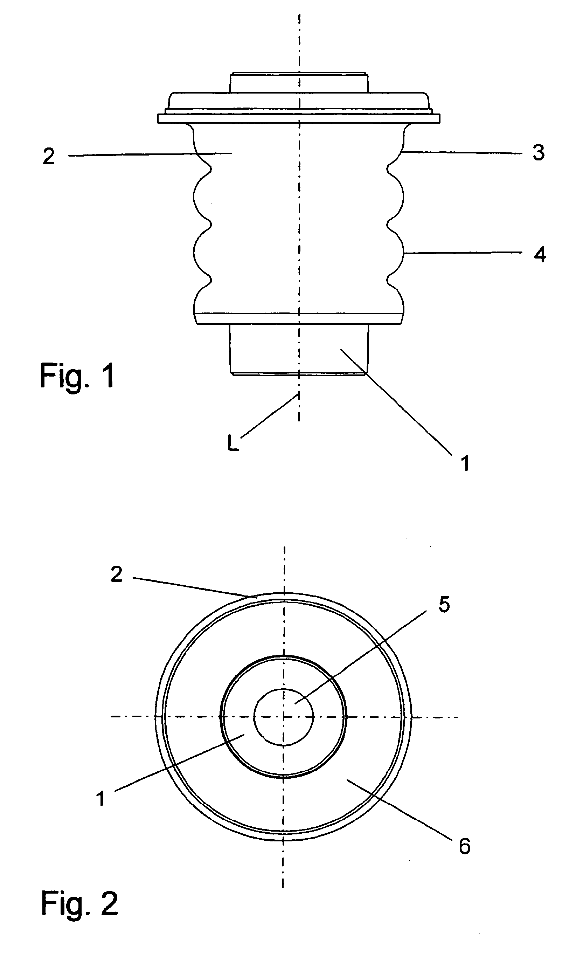

Aus Figur 1 ist eine Seitenansicht einer ersten und nicht-erfindungsgemäßen Ausführungsform des Lagers ersichtlich, wobei mit L die Längsachse des Lagers bezeichnet ist. Dabei ist ein Innenteil 1 von einer Außenhülse 2 umgeben, welche an ihrer Außenmantelfläche 3 eine Wellenkontur 4 aufweist.

Die Draufsicht nach Figur 2 zeigt, dass das Lager insgesamt rotationssymmetrisch aufgebaut ist und das Innenteil 1 und die Außenhülse 2 konzentrisch zueinander angeordnet sind. Das Innenteil 1 ist als Hülse ausgebildet und weist eine durchgehende Bohrung 5 auf, wobei zwischen dem Innenteil 1 und der Außenhülse 2 ein Elastomerkörper 6 angeordnet ist, über welchen das Innenteil 1 und die Außenhülse 2 miteinander verbunden sind.

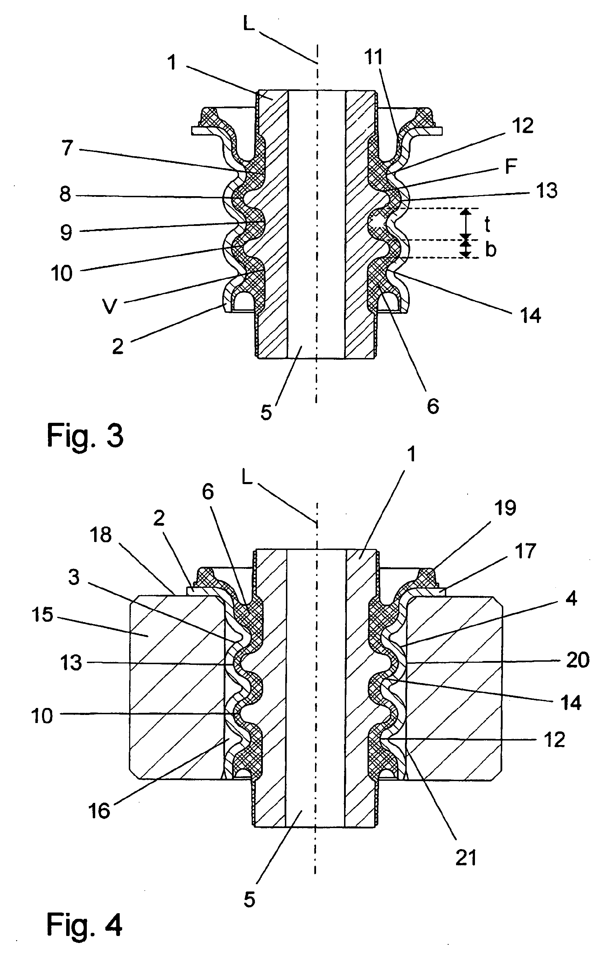

Aus Figur 3 ist eine Schnittansicht der ersten Ausführungsform ersichtlich, wobei das Innenteil 1 an seiner Außenmantelfläche 7 zwei sich in Richtung auf die Außenhülse 2 erstreckende Erhebungen (Wellenberge) 8 und eine dazwischen liegende Vertiefung (Wellental) 9 aufweist. Hierdurch wird insgesamt eine sich in Längsrichtung L erstreckende Wellenkontur 10 gebildet, wobei die mittlere Breite "b" der Wellenberge 8 geringer als die mittlere Breite "t" des Wellentals 9 ist. Ferner schließt sich an den voneinander abgewandten Flanken der beiden Wellenberge 8 jeweils eine weitere Vertiefung "V" an.

Die Außenhülse 2 weist an ihrer Innenmantelfläche 11 drei auf das Innenteil 1 zulaufende Erhebungen (Wellenberge) 12 und zwei dazwischen liegende Vertiefungen (Wellentäler) 13 auf, die zusammen eine sich in Längsrichtung L erstreckende Wellenkontur 14 bilden. Dabei ist die mittlere Breite der Wellenberge 12 geringer als die mittlere Breite der Wellentäler 13. Der zwischen den beiden Wellenkonturen 10 und 14 angeordnete Elastomerkörper 6 verläuft in Längsrichtung L ebenfalls wellenförmig, wobei die beiden Wellenkonturen 10 und 14 ineinander greifen, so dass in Längsrichtung L eine axiale Überdeckung der beiden Wellenkonturen 10 und 14 vorliegt.

Wie aus Figur 3 ersichtlich unterscheidet sich der Verlauf der Wellenkontur 10 vom Verlauf der Wellenkontur 14, so dass die beiden Wellenkonturen 10 und 14 in Längsrichtung L nicht äquidistant zueinander sind. Insbesondere ist der Abstand zwischen den Erhebungen 8 und den Vertiefungen 13 geringer als der Abstand zwischen den Vertiefungen 9 und den Erhebungen 12.

Aus Figur 4 ist der Querschnitt eines Kraftfahrzeugbauteils 15 ersichtlich, das ein Lagerauge 16 aufweist, in welches das Lager gemäß der ersten Ausführungsform eingesetzt ist. Zur axialen Fixierung des Lagers in eine Richtung weist die Außenhülse 2 an einem Ende eine Außenschulter 17 auf, die an dem das Lagerauge 16 umgebenden Randbereich 18 des Kraftfahrzeugbauteils 15 anliegt. Im Bereich der Vertiefungen 13 weist die Außenhülse 2 an der Außenmantelfläche 3 Erhebungen 20 als Teil der Wellenkontur 4 auf, die an der Innenmantelfläche 21 des Lagerauges 16 anliegen. Ferner ist an der dem Kraftfahrzeugbauteil abgewandten Seite der Außenschulter 17 ein Axialpuffer 19 aus Elastomerwerkstoff angeordnet, der sich in Längsrichtung L erstreckt.

Das Innenteil 1 und die Außenhülse 2 bestehen aus Metall, wobei nach dem Vulkanisationsprozess des aus Gummi bestehenden Elastomerkörpers 6 die Außenhülse 2 kalibriert worden ist, um eine radiale Vorspannung in dem Elastomerkörper 6 zu erzielen. Dabei weist die Außenhülse 2 im Bereich der Erhebungen 12 einen geringeren Außendurchmesser als im Bereich der Vertiefungen 13 auf.

Die Überdeckung der beiden Wellenkonturen 10 und 14 führt in Längsrichtung zu einer hohen Axialsteifigkeit, zu der auch die durch das Kalibrieren erzielte axiale Vorspannung des Elastomerkörpers 6 im Bereich der Flanken "F" (siehe Fig. 3) der Erhebungen 8 beiträgt.

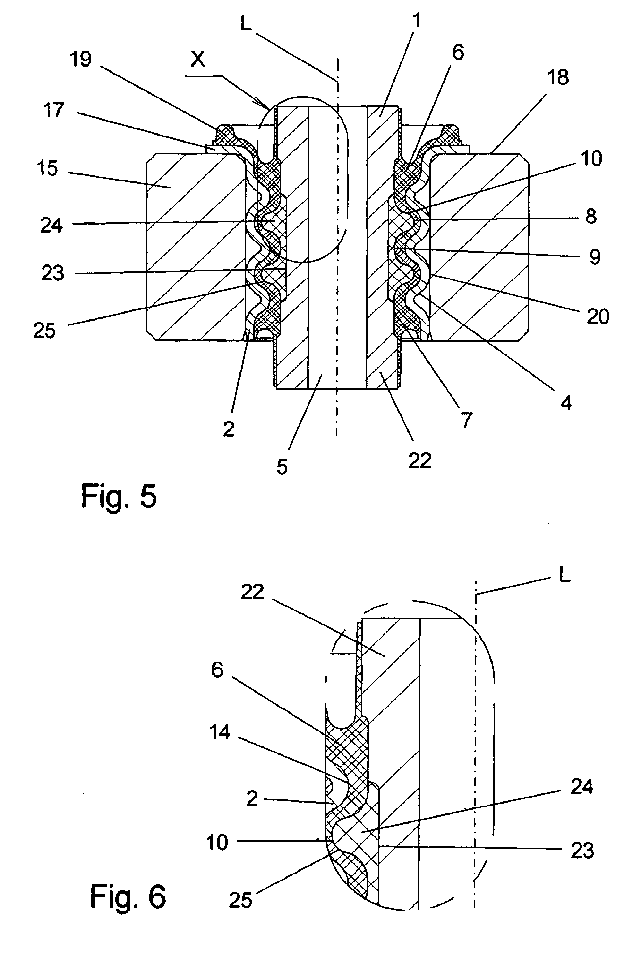

Aus Figur 5 ist eine zweite und nicht-erfindungsgemäßen Ausführungsform des Lagers ersichtlich, wobei zur ersten Ausführungsform identische oder ähnliche Merkmale mit denselben Bezugszeichen versehen sind. Die zweite Ausführungsform unterscheidet sich von der ersten Ausführungsform lediglich hinsichtlich der Ausgestaltung des Innenteils 1, welches gemäß der zweiten Ausführungsform zweiteilig ausgebildet ist.

Das Innenteil 1 weist einen Kern 22 aus Metall auf, der als Hülse ausgebildet und an seiner Außenmantelfläche mit einer Nut 23 versehen ist. Im Bereich dieser Nut 23 ist eine Kunststoffummantelung 24 an den Kern 22 angespritzt, von deren Außenmantelfläche 25 die Wellenkontur 10 (siehe Fig. 6) gebildet wird. Somit bildet die Außenmantelfläche 25 die Außenmantelfläche 7 des Innenteils 1 im Bereich der Wellenkontur 10.

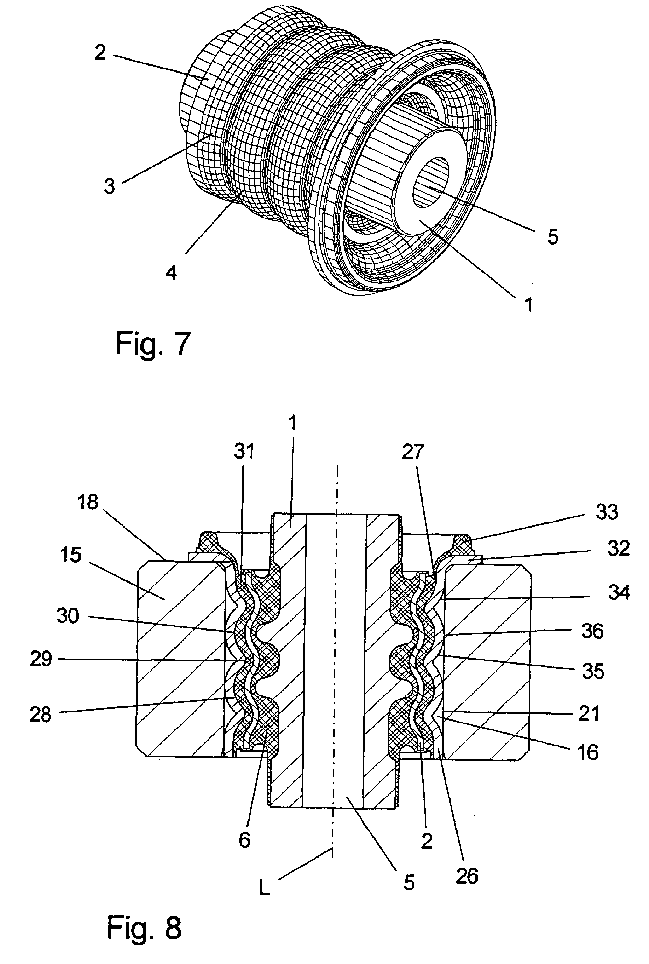

Figur 6 zeigt eine vergrößerte Darstellung des in Figur 5 mit X gekennzeichneten Ausschnitts, während Figur 7 eine perspektivische Ansicht des Lagers wiedergibt.

Aus Figur 8 ist eine dritte und erfindungsgemäße Ausführungsform des Lagers ersichtlich, wobei zur ersten Ausführungsform identische oder ähnliche Merkmale mit denselben Bezugszeichen versehen sind.

Die dritte Ausführungsform unterscheidet sich von der ersten Ausführungsform im Wesentlichen dadurch, dass die Außenhülse 2 von einer zweiten Außenhülse 26 umgriffen ist, welche an ihrer Innenmantelfläche 27 eine in Längsrichtung L verlaufende Wellenkontur 28 mit Erhebungen 29 und Vertiefungen 30 aufweist. Zwischen der Außenhülse 2 und der zweiten Außenhülse 26 ist ein in Längsrichtung L wellenförmig verlaufender zweiter Elastomerkörper 31 angeordnet, über den die Außenhülse 2 mit der zweiten Außenhülse 26 verbunden ist. Die Außenhülse 2 übernimmt somit die Aufgabe einer Zwischenhülse und weist keine Außenschulter mit Axialpuffer mehr auf. Wie aus der Figur ersichtlicht, ist die Außenhülse 2 vollständig in einem von dem Elastomerkörper 6 und dem zweiten Elastomerkörper 31 ausgebildeten Körper eingebettet.

Zur axialen Fixierung des Lagers in eine Richtung weist die zweite Außenhülse 26 an einem Ende eine Außenschulter 32 auf, die an dem das Lagerauge 16 umgebenden Randbereich 18 des Kraftfahrzeugbauteils 15 anliegt. Dabei ist an der dem Kraftfahrzeugbauteil 15 abgewandten Seite der Außenschulter 32 ein Axialpuffer 33 aus Elastomerwerkstoff angeordnet, der sich in Längsrichtung L erstreckt.

Die zweite Außenhülse 26 ist nach Abschluss des Vulkanisationsprozesses der beiden aus Gummi bestehenden Elastomerkörper 6 und 31 kalibriert worden und weist an ihrer Außenmantelfläche 34 eine sich in Längsrichtung L erstreckende Wellenkontur 35 auf. Dabei ist die zweite Außenhülse 26 im Bereich der Vertiefungen 30 an ihrer Außenmantelfläche 34 mit Erhebungen 36 versehen, die an der Innenmantelfläche 21 des Lagerauges 16 anliegen.

### Bezugszeichenliste:

- 1: Innenteil
- 2: Außenhülse
- 3: Außenmantelfläche der Außenhülse
- 4: Wellenkontur an Außenmantelfläche der Außenhülse
- 5: Durchgehende Bohrung in Innenteil
- 6: Elastomerkörper zwischen Innenteil und Außenhülse
- 7: Außenmantelfläche des Innenteils
- 8: Erhebungen an Außenmantelfläche des Innenteils
- 9: Vertiefung an Außenmantelfläche des Innenteils
- 10: Wellenkontur an Außenmantelfläche des Innenteils
- 11: Innenmantelfläche der Außenhülse
- 12: Erhebungen an Innenmantelfläche der Außenhülse
- 13: Vertiefungen an Innenmantelfläche der Außenhülse
- 14: Wellenkontur an Innenmantelfläche der Außenhülse
- 15: Kraftfahrzeugbauteil
- 16: Lagerauge des Kraftfahrzeugbauteils
- 17: Außenschulter der Außenhülse
- 18: Randbereich des Kraftfahrzeugbauteils
- 19: Axialpuffer an Außenschulter der Außenhülse
- 20: Erhebungen an Außenmantelfläche der Außenhülse
- 21: Innenmantelfläche des Lagerauges
- 22: Kern des Innenteils
- 23: Nut in Außenmantelfläche des Kerns
- 24: Ummantelung des Kerns
- 25: Außenmantelfläche der Ummantelung
- 26: Zweite Außenhülse
- 27: Innenmantelfläche der zweiten Außenhülse
- 28: Wellenkontur an der Innenmantelfläche der zweiten Außenhülse
- 29: Erhebungen an der Innenmantelfläche der zweiten Außenhülse
- 30: Vertiefungen an der Innenmantelfläche der zweiten Außenhülse
- 31: Zweiter Elastomerkörper
- 32: Außenschulter der zweiten Außenhülse
- 33: Axialpuffer an Außenschulter der zweiten Außenhülse
- 34: Außenmantelfläche der zweiten Außenhülse
- 35: Wellenkontur an der Außenmantelfläche der zweiten Außenhülse
- 36: Erhebungen an der Außenmantelfläche der zweiten Außenhülse
- t: Mittlere Breite der Vertiefung an Außenmantelfläche des Innenteils
- b: Mittlere Breite der Erhebungen an Außenmantelfläche des Innenteils
- F: Flanke der Erhebungen an Außenmantelfläche des Innenteils
- L: Längsachse
- X: Ausschnitt
- V: Weitere Vertiefungen an Außenmantelfläche des Innenteils

## Patentansprüche

1. Lager für ein Kraftfahrzeug, mit
einem Innenteil (1), welches an seiner Außenmantelfläche (7) eine in Längsrichtung (L) verlaufende erste Wellenkontur (10) aufweist,
einer das Innenteil (1) umgreifenden Außenhülse (2), welche an ihrer Innenmantelfläche (11) eine in Längsrichtung (L) verlaufende zweite Wellenkontur (14) aufweist, wobei beide Wellenkonturen (10, 14) jeweils mehrere auf die andere Wellenkontur (14, 10) zulaufende Wellenberge (8, 12) und wenigstens ein benachbartes Wellental (9, 13) aufweisen,
einem zwischen den beiden Wellenkonturen (10, 14) angeordneten und in Längsrichtung (L) wellenförmig verlaufenden Elastomerkörper (6), über den das Innenteil (1) mit der Außenhülse (2) verbunden ist, wobei die beiden Wellenkonturen (10,14) nicht äquidistant zueinander sind
**dadurch gekennzeichnet, dass**
die Außenhülse (2) an ihrer Außenmantelfläche (3) eine in Längsrichtung (L) verlaufende dritte Wellenkontur (4) aufweist, wobei die Außenhülse (2) von einer zweiten Außenhülse (26) umgriffen ist, welche an ihrer Innenmantelfläche (27) eine in Längsrichtung (L) verlaufende vierte Wellenkontur (28) aufweist, wobei zwischen der Außenhülse (2) und der zweiten Außenhülse, (26) ein in Längsrichtung (L) wellenförmig verlaufender zweiter Elastomerkörper (31) angeordnet ist, über den die Außenhülse (2) mit der zweiten Außenhülse (26) verbunden ist.

2. Lager für ein Kraftfahrzeug nach Anspruch 1, **dadurch gekennzeichnet, dass** die beiden Wellenkonturen (10, 14) unterschiedlich sind.

3. Lager für ein Kraftfahrzeug nach Anspruch 1, **dadurch gekennzeichnet, dass** bei wenigstens einer Wellenkontur (10, 14) die mittlere Breite des Wellenbergs (8, 12) und die mittlere Breite des Wellentals (9, 13) unterschiedlich sind.

4. Lager für ein Kraftfahrzeug nach Anspruch 1 oder 3, **dadurch gekennzeichnet, dass** bei wenigstens einer Wellenkontur (10, 14) die mittlere Breite des Wellenbergs (8, 12) geringer als die mittlere Breite des Wellentals (9, 13) ist.

5. Lager für ein Kraftfahrzeug nach einem der vorangehenden Ansprüche 1 bis 4, **dadurch gekennzeichnet, dass** die erste Wellenkontur (10) wenigstens einen auf die Außenhülse (2) zulaufenden Wellenberg (8) und wenigstens ein benachbartes Wellental (9) aufweist, dessen mittlere Breite (t) größer als die mittlere Breite (b) des Wellenbergs (8) ist.

6. Lager für ein Kraftfahrzeug nach einem der vorangehenden Ansprüche 1 bis 5, **dadurch gekennzeichnet, dass** die zweite Wellenkontur (14) wenigsten einen auf das Innenteil (1) zulaufenden Wellenberg (12) und wenigstens ein benachbartes Wellental (13) aufweist, dessen mittlere Breite größer als die mittlere Breite des Wellenbergs (12) ist.

7. Lager für ein Kraftfahrzeug nach einem der vorangehenden Ansprüche 1 bis 6, **dadurch gekennzeichnet, dass** die beiden Wellenkonturen (10, 14) ineinander greifen.

8. Lager für ein Kraftfahrzeug nach einem der vorangehenden Ansprüche 1 bis 7, **dadurch gekennzeichnet, dass** das Innenteil (1) eine Hülse ist.

9. Lager für ein Kraftfahrzeug nach einem der vorangehenden Ansprüche 1 bis 8, **dadurch gekennzeichnet, dass** das Innenteil (1) aus einem Kern (22) und einer diesen umgreifenden Ummantelung (24) besteht, von deren Außenmantelfläche (25) die erste Wellenkontur (10) gebildet ist.

10. Lager für ein Kraftfahrzeug nach Anspruch 9, **dadurch gekennzeichnet, dass** der Kern (22) eine Nut (23) aufweist, in welche die Ummantelung (24) eingreift.

11. Lager für ein Kraftfahrzeug nach einem der vorangehenden Ansprüche 1 bis 10, **dadurch gekennzeichnet, dass** das Innenteil (1) und die Außenhülse (2) konzentrisch zueinander angeordnet sind.

12. Lager für ein Kraftfahrzeug nach einem der vorangehenden Ansprüche 1 bis 11, **dadurch gekennzeichnet, dass** die Außenhülse (2) an einem Ende eine Außenschulter (17) aufweist.

13. Lager für ein Kraftfahrzeug nach Anspruch 12, **dadurch gekennzeichnet, dass** an der Außenschulter (17) ein sich in Längsrichtung (L) erstreckender Elastomerpuffer (19) angeordnet ist.

14. Lager für ein Kraftfahrzeug nach Anspruch 1, **dadurch gekennzeichnet, dass** die dritte und die vierte Wellenkontur (4, 28) ineinander greifen.

15. Kraftfahrzeugbauteil mit einem Lager nach einem der Ansprüche 1 bis 14, **dadurch gekennzeichnet, dass** das Kraftfahrzeugbauteil (15) ein Lagerauge (16) aufweist, in welches das Lager eingesetzt ist.

## Claims

1. A mount for an automotive vehicle, with
an inner part (1) which has on its outer surface area (7) a first wave contour (10) running in the longitudinal direction (L),
an outer sleeve (2) which surrounds the inner part (1) and which has on its inner surface area (11) a second wave contour (14) running in the longitudinal direction (L), the two wave contours (10, 14) having in each case a plurality of wave crests (8, 12) running towards the other wave contour (14, 10) and at least one adjacent wave trough (9, 13),
an elastomeric body (6) which is arranged between the two wave contours (10, 14) and runs in a wavy manner in the longitudinal direction (L) and via which the inner part (1) is connected to the outer sleeve (2), the two wave contours (10, 14) not being equidistant from one another,
**characterized in that**
the outer sleeve (2) has on its outer surface area (3) a third wave contour (4) running in the longitudinal direction (L), the outer sleeve (2) being surrounded by a second outer sleeve (26) which has on its inner surface area (27) a fourth wave contour (28) running in the longitudinal direction (L), there being arranged between the outer sleeve (2) and the second outer sleeve (26) a second elastomeric body (31) which runs in a wavy manner in the longitudinal direction (L) and via which the outer sleeve (2) is connected to the second outer sleeve (26).

2. Mount for an automotive vehicle according to Claim 1, **characterized in that** the two wave contours (10, 14) are different.

3. Mount for an automotive vehicle according to Claim 1, **characterized in that**, in the case of at least one wave contour (10, 14), the average width of the wave crest (8, 12) and the average width of the wave trough (9, 13) are different.

4. Mount for an automotive vehicle according to Claim 1 or 3, **characterized in that**, in the case of at least one wave contour (10, 14), the average width of the wave crest (8, 12) is smaller than the average width of the wave trough (9, 13).

5. Mount for an automotive vehicle according to one of the preceding Claims 1 to 4, **characterized in that** the first wave contour (10) has at least one wave crest (8) running towards the outer sleeve (2) and at least one adjacent wave trough (9), the average width (t) of which is greater than the average width (b) of the wave crest (8).

6. Mount for an automotive vehicle according to one of the preceding Claims 1 to 5, **characterized in that** the second wave contour (14) has at least one wave crest (12) running towards the inner part (1) and at least one adjacent wave trough (13), the average width of which is greater than the average width of the wave crest (12).

7. Mount for an automotive vehicle according to one of the preceding Claims 1 to 6, **characterized in that** the two wave contours (10, 14) engage one into the other.

8. Mount for an automotive vehicle according to one of the preceding Claims 1 to 7, **characterized in that** the inner part (1) is a sleeve.

9. Mount for an automotive vehicle according to one of the preceding Claims 1 to 8, **characterized in that** the inner part (1) consists of a core (22) and of a sheathing (24) which surrounds the latter and the outer surface area (25) of which forms the first wave contour (10).

10. Mount for an automotive vehicle according to Claim 9, **characterized in that** the core (22) has a groove (23), into which the sheathing (24) engages.

11. Mount for an automotive vehicle according to one of the preceding Claims 1 to 10, **characterized in that** the inner part (1) and the outer sleeve (2) are arranged concentrically to one another.

12. Mount for an automotive vehicle according to one of the preceding Claims 1 to 11, **characterized in that** the outer sleeve (2) has an outer shoulder (17) at one end.

13. Mount for an automotive vehicle according to Claim 12, **characterized in that** an elastomeric buffer (19) extending in the longitudinal direction (L) is arranged on the outer shoulder (17).

14. Mount for an automotive vehicle according to Claim 1, **characterized in that** the third and the fourth wave contour (4, 28) engage one into the other.

15. Automotive vehicle component having a mount according to one of Claims 1 to 14, **characterized in that** the automotive vehicle component (15) has a bearing lug (16), into which the mount is inserted.

## Revendications

1. Palier pour un véhicule automobile, avec :
une partie intérieure (1) comportant au niveau de sa surface d'enveloppe extérieure (7) un premier contour ondulé (10) s'étendant dans la direction longitudinale (L) ;
un fourreau extérieur (2) ceignant la partie intérieure (1) et comportant au niveau de sa surface d'enveloppe intérieure (11) un deuxième contour ondulé (14) s'étendant dans la direction longitudinale (L), les deux contours ondulés (10, 14) comportant respectivement plusieurs sommets d'ondulation (8, 12) se terminant sur l'autre contour ondulé (14, 10) et au moins un creux d'ondulation (9, 13) connexe ;
un corps en élastomère (6) disposé entre les deux contours ondulés (10, 14), s'étendant en suivant une forme ondulée dans la direction longitudinale (L) et via lequel la partie intérieure (1) est reliée au fourreau extérieur (2), les deux contours ondulés (10, 14) n'étant pas placés à équidistance l'un de l'autre ;
**caractérisé en ce que** :
le fourreau extérieur (2) comporte au niveau de sa surface d'enveloppe extérieure (3) un troisième contour ondulé (4) s'étendant dans la direction longitudinale (L), le fourreau extérieur (2) étant ceint par un deuxième fourreau extérieur (26) comportant au niveau de sa surface d'enveloppe intérieure (27) un quatrième contour ondulé (28) s'étendant dans la direction longitudinale (L), un deuxième corps en élastomère (31) s'étendant selon une forme ondulée dans la direction longitudinale (L) étant disposé entre le fourreau extérieur (2) et le deuxième fourreau extérieur (26), le fourreau extérieur (2) étant relié au deuxième fourreau extérieur (26) via ledit corps.

2. Palier pour un véhicule automobile selon la revendication 1, **caractérisé en ce que** les deux contours ondulés (10, 14) sont différents.

3. Palier pour un véhicule automobile selon la revendication 1, **caractérisé en ce qu'**en présence d'au moins un contour ondulé (10, 14), la largeur moyenne du sommet d'ondulation (8, 12) et la largeur moyenne du creux d'ondulation (9, 13) sont différentes.

4. Palier pour un véhicule automobile selon la revendication 1 ou 3, **caractérisé en ce qu'**en présence d'au moins un contour ondulé (10, 14), la largeur moyenne du sommet d'ondulation (8, 12) est inférieure à la largeur moyenne du creux d'ondulation (9, 13).

5. Palier pour un véhicule automobile selon l'une quelconque des revendications précédentes 1 à 4, **caractérisé en ce que** le premier contour ondulé (10) comporte au moins un sommet d'ondulation (8) se terminant sur le fourreau extérieur (2) et au moins un creux d'ondulation (9) connexe dont la largeur moyenne (t) est supérieure à la largeur moyenne (b) du sommet d'ondulation (8).

6. Palier pour un véhicule automobile selon l'une quelconque des revendications précédentes 1 à 5, **caractérisé en ce que** le deuxième contour ondulé (14) comporte au moins un sommet d'ondulation (12) se terminant sur la partie intérieure (1) et au moins un creux d'ondulation (13) connexe dont la largeur moyenne est supérieure à la largeur moyenne du sommet d'ondulation (12).

7. Palier pour un véhicule automobile selon l'une quelconque des revendications précédentes 1 à 6, **caractérisé en ce que** les deux contours ondulés (10, 14) s'emboîtent l'un dans l'autre.

8. Palier pour un véhicule automobile selon l'une quelconque des revendications précédentes 1 à 7, **caractérisé en ce que** la partie intérieure (1) est un fourreau.

9. Palier pour un véhicule automobile selon l'une quelconque des revendications précédentes 1 à 8, **caractérisé en ce que** la partie intérieure (1) se compose d'un coeur (22) et d'une enveloppe (24) ceignant celui-ci et formant le premier contour ondulé (10) à partir de la surface d'enveloppe extérieure (25).

10. Palier pour un véhicule automobile selon la revendication 9, **caractérisé en ce que** le coeur (22) comporte une rainure (23) dans laquelle l'enveloppe (24) s'emboîte.

11. Palier pour un véhicule automobile selon l'une quelconque des revendications précédentes 1 à 10, **caractérisé en ce que** la partie intérieure (1) et le fourreau extérieur (2) sont disposés concentriquement l'un par rapport à l'autre.

12. Palier pour un véhicule automobile selon l'une quelconque des revendications précédentes 1 à 11, **caractérisé en ce que** le fourreau extérieur (2) comporte un épaulement extérieur (17) disposé au niveau d'une extrémité.

13. Palier pour un véhicule automobile selon la revendication 12, **caractérisé en ce qu'**un tampon en élastomère (19) s'étendant dans la direction longitudinale (L) est disposé au niveau de l'épaulement extérieur (17).

14. Palier pour un véhicule automobile selon la revendication 1, **caractérisé en ce que** le troisième et le quatrième contour ondulé (4, 28) s'emboîtent l'un dans l'autre.

15. Composant de véhicule automobile doté d'un palier selon l'une quelconque des revendications 1 à 14, **caractérisé en ce que** le composant de véhicule automobile (15) comporte un oeillet de palier (16) dans lequel le palier est inséré.
